# EUROPÄISCHE PATENTSCHRIFT

(11) **EP 3 705 955 B1**
(45) Veröffentlichungstag und Bekanntmachung des Hinweises auf die Patenterteilung: **11.01.2023**
(21) Anmeldenummer: 20160715.7
(22) Anmeldetag: 03.03.2020
(51) Int. Cl.: G05B 19/042

(54) **VERFAHREN ZUR SICHEREN KOMMUNIKATION ZWISCHEN EINEM FELDGERÄT DER AUTOMATISIERUNGSTECHNIK UND EINEM ENDGERÄT SOWIE SYSTEM ZUR SICHEREN KOMMUNIKATION ZWISCHEN EINEM FELDGERÄT UND EINEM ENDGERÄT**
METHOD FOR SECURE COMMUNICATION BETWEEN A FIELD DEVICE FOR AUTOMATION TECHNOLOGY AND A TERMINAL AND SYSTEM FOR SECURE COMMUNICATION BETWEEN A FIELD DEVICE AND A TERMINAL
PROCÉDÉ DE COMMUNICATION SÉCURISÉE ENTRE UN APPAREIL DE TERRAIN DE LA TECHNIQUE DE L'AUTOMATISATION ET UN TERMINAL AINSI QUE SYSTÈME DE COMMUNICATION SÉCURISÉE ENTRE UN APPAREIL DE TERRAIN ET UN TERMINAL

(30) Priorität: 08.03.2019 DE 102019106049
(43) Veröffentlichungstag der Anmeldung: 09.09.2020
(73) Patentinhaber: Krohne Messtechnik GmbH, 47058 Duisburg (DE)
(72) Erfinder: Hottgenroth, Wolfgang, 45259 Essen (DE)
(74) Vertreter: Gesthuysen Patentanwälte

(56) Entgegenhaltungen:
- EP-A1- 3 312 692
- DE-A1-102012 109 348
- DE-A1-102014 105 076

## Beschreibung

Die Erfindung betrifft ein Verfahren zur sicheren Kommunikation zwischen einem Feldgerät der Automatisierungstechnik und einem mit dem Feldgerät über eine Endgerät-Kommunikationsverbindung verbundenen Endgerät, wobei das Feldgerät mit einem physikalischen Prozess in Wirkzusammenhang steht und das Feldgerät über eine Feldbusschnittstelle mit anderen Feldgeräten und/oder einem Prozessleitsystem in Verbindung bringbar ist zum Austausch von Prozessinformationen. Darüber hinaus betrifft die Erfindung auch ein System zur sicheren Kommunikation zwischen einem Feldgerät der Automatisierungstechnik und einem Endgerät.

Feldgeräte der Automatisierungstechnik werden seit vielen Jahrzehnten zur Messwerterfassung (Sensorik) und zur Ansteuerung von Stellgliedern (Aktuatorik) in physikalisch-technischen Prozessen eingesetzt; dies ist damit gemeint, wenn es heißt, dass die Feldgeräte mit einem physikalischen Prozess in Wirkzusammenhang stehen. Im Falle sensorischer Feldgeräte erfassen diese messtechnisch über ihre Sensoren Prozessgrößen, bereiten die Rohmessdaten mit Hilfe der Datenverarbeitungselektronik in eine zu übermittelnde Messgröße auf und übertragen diese Messgröße meist an ein übergeordnetes Prozessleitsystem. Die Feldgeräte arbeiten "im Feld", sie sind im Regelfall sehr robust und störsicher ausgelegt, da sie den Widrigkeiten des industriellen Prozesses ausgesetzt sind, teilweise werden sie im Freien eingesetzt. Es liegen üblicherweise also keine "Laborbedingungen" vor.

Zur Übermittlung von Messdaten oder von Stellgrößen bedient sich das Feldgerät der erwähnten Feldbusschnittstelle, die ein etabliertes Protokoll realisiert. Zu den etablierten Feldbusschnittstellen gehören beispielsweise die seit Jahrzehnten eingesetzte analoge 4-20 mA Schnittstelle oder auch die digitale HART-Schnittstelle. Als physikalisches Übertragungsmedium dient in diesem Fall oft eine 2-Leiter-Anordnung, wobei dem analogen Stromsignal der Stromschnittstelle das digitale Signal des HART-Protokolls aufmoduliert werden kann. Feldbusschnittstellen dieser Art realisieren nur vergleichsweise geringe Übertragungsraten, gleichwohl haben sie eine außerordentlich hohe Bestandskraft in der Prozessindustrie, da ihre Zuverlässigkeit nachgewiesen ist und sie als beeinflussungssicher gelten. Über Feldbusschnittstellen kann oft nur in sehr beschränktem Maße auf das Feldmessgerät Einfluss genommen werden, da ein Zugriff auf Funktionalitäten des Feldgeräts, die außerhalb der eigentlichen Übertragung von Messergebnissen oder dem Empfang von Stellgrößen liegen, über die Feldbusschnittstelle - absichtlich, zur Wahrung der Betriebssicherheit - überhaupt nicht vorgesehen ist.

Sensible und damit zu schützende Funktionalitäten von Feldgeräten, die außerhalb des Bereichs der Messdaten- oder der Stellsignalübertragung liegen, betreffen beispielsweise die Parametrierung, die Einstellung von Betriebsmodi, Kalibrierungsparameter des Feldgeräts und die Diagnose.

Es gibt Bestrebungen, die zuvor beschriebenen Feldgeräte mit einer - weiteren - Kommunikationsschnittstelle, nämlich der eingangs bereits erwähnten Endgerät-Kommunikationsschnittstelle auszustatten, mit der meist moderne Kommunikationstechnologien realisiert werden, sodass höhere Übertragungsraten und moderne Bedienschnittstellen umsetzbar sind. Über diese Endgerät-Kommunikationsschnittstelle sollen im Wesentlichen nicht prozessrelevanten Daten ausgetauscht werden.

Die Druckschriften DE 10 2012 109 348, DE 10 2014 105 076 und EP 16 194 525 befassen sich mit der Absicherung der Kommunikation zwischen Feldgeräten und Bediengeräten.

Gegenstand der vorliegenden Betrachtung sind Feldgeräte, die über eine Endgerät-Kommunikationsschnittstelle verfügen, über die es einem externen Endgerät möglich ist, auf informationstechnische Inhalte des Feldgeräts zuzugreifen, wobei es sich bei diesen informationstechnischen Inhalten in erster Linie nicht um die eigentlichen Messdaten handelt. Es handelt sich also nicht um eine Prozessschnittstelle, über die das Feldgerät Messdaten ausgibt und Stellgrößen empfängt.

Bei dem Endgerät kann es sich um ein spezielles Bediengerät für die jeweiligen Feldgeräte handeln, es kann sich aber auch um einen handelsüblichen Computer, ein Handy oder einen Tablet-Computer handeln. Endgeräte müssen keine eigene Bedieneinheit (Tastatur, Maus, Touchscreen) oder Anzeige aufweisen, es kann sich auch nur um einen Speicher mit einer entsprechenden hardwaremäßigen Schnittstelle handeln (z. B. USB-Stick, Dongle).

Aufgabe der vorliegenden Erfindung ist es, ein Verfahren zur sicheren Kommunikation zwischen dem Feldgerät und dem mit dem Feldgerät über die Endgerät-Kommunikationsschnittstelle verbundenen Endgerät sowie ein entsprechendes System mit einem Feldgerät und anderen Komponenten anzugeben, bei denen mit hoher Sicherheit ein missbräuchlicher Zugriff auf das Feldgerät mittels einer Endgerät-Kommunikationsschnittstelle verhindert wird.

Bei dem einleitend geschilderten Verfahren ist die Aufgabe dadurch gelöst, dass in dem Endgerät eine individuelle Zugangskennung hinterlegt ist und das Endgerät zu dem Feldgerät seine Zugangskennung überträgt. Die Übertragung der Zugangskennung kann bei Kontaktaufnahme mit dem Feldgerät automatisch erfolgen oder erst nach Anforderung durch das Feldgerät, darauf kommt es hier nicht an.

Weiterhin ist vorgesehen, dass das Feldgerät über eine Server-Kommunikationsverbindung mit einem Authentifizierungsserver verbunden ist und das Feldgerät die Zugangskennung oder eine von der Zugangskennung abgeleitete Zugangskennung zu dem Authentifizierungsserver überträgt. Die Zugangskennung kann also im Klartext oder auch in einer abgewandelten, beispielsweise verschlüsselten Form zu dem Authentifizierungsserver übertragen werden.

Nun ist vorgesehen, dass auf dem Authentifizierungsserver Authentifikationsdaten hinterlegt sind, anhand derer die Authentizität der Zugangskennung - bzw. der abgeleiteten Zugangskennung - und damit die Authentizität des Endgerätes auf dem Authentifizierungsserver überprüft wird. Es wird demnach also auf dem von dem Feldgerät verschiedenen Authentifizierungsserver eine Berechtigung des Endgerätes überprüft. So ist sichergestellt, dass ein Endgerät mit einer unbekannten Zugangskennung als unberechtigter Kommunikationsteilnehmer erkannt wird. Die Überprüfung auf dem Authentifizierungsserver kann also ergeben, dass ein Endgerät mit der entsprechenden Zugangskennung unbekannt - und daher unberechtigt - ist oder bekannt ist und demzufolge eine gewisse Kommunikationsberechtigung mit sich bringt.

Das resultierende und auf dem Authentifizierungsserver ermittelte Authentifikationsergebnis wird dann über die Server-Kommunikationsverbindung zu dem Feldgerät übertragen. Das Feldgerät verfügt damit über die Information, ob das mit ihm in Verbindung stehende Endgerät bekannt oder unbekannt ist und demzufolge eine Berechtigung zur Kommunikation hat oder nicht. In Abhängigkeit von dem auf das Feldgerät übertragenen Authentifikationsergebnis werden dem Endgerät dann Ressourcen des Feldgerätes verfügbar gemacht. Wenn die Überprüfung ergeben hat, dass das Endgerät unbekannt ist, werden dem Endgerät keinerlei Ressourcen des Feldgerätes verfügbar gemacht. Dieses Ergebnis kann dem Endgerät mitgeteilt werden, das Feldgerät kann auch durch keinerlei Reaktion auf die Unbekanntheit des Endgerätes reagieren.

Der Vorteil der Verwendung eines Authentifizierungsservers besteht darin, dass entsprechende Authentifikationsdaten nicht in dem Feldgerät selbst hinterlegt werden müssen. Dies ist insbesondere bei großen automatisierten technischen Anlagen von großem Nutzen, in denen sehr viele Feldgeräte zum Einsatz kommen, also beispielsweise Hundert oder mehrere Hundert Feldgeräte. Bei derartigen Anlagen nimmt selbstverständlich auch die Anzahl der Endgeräte bzw. der Nutzer von Endgeräten zu, die aus verschiedenen Gründen auf die zum Einsatz kommenden Feldgeräte zugreifen können sollen.

Die individuelle Zugangskennung soll das mit dem Feldgerät in Verbindung stehende Endgerät beziehungsweise den Verwender des mit dem Feldgerät in Verbindung stehenden Endgeräts eindeutig identifizieren. In einer bevorzugten Ausgestaltung ist deshalb vorgesehen, dass die individuelle Zugangskennung einen individuellen Endgerätenamen und ein individuelles Endgerätepasswort aufweist, und/oder dass die individuelle Zugangskennung einen individuellen Verwendernamen und ein individuelles Verwenderpasswort aufweist. Dadurch ist es beispielsweise möglich, dass ein bestimmtes Endgerät - beispielsweise ein Laptop -, das von mehreren Verwendern verwendet wird, eine von dem Endgerät unabhängige und den entsprechenden Verwender dennoch eindeutig identifizierende Kennung aufweist. Wenn verschiedene Verwender ein und desselben Endgerätes mit unterschiedlichen Verwendernamen und Verwenderpassworten ausgestattet sind, sind die verschiedenen Verwender des einen Endgeräts voneinander unterscheidbar.

Bei einer bevorzugten Ausgestaltung des Verfahrens ist vorgesehen, dass in dem Feldgerät die Adresse des Authentifizierungsservers hinterlegt ist und unter Verwendung der Adresse des Authentifizierungsservers die Server-Kommunikationsverbindung hergestellt wird. Dadurch ist es beispielsweise möglich, dass der Authentifizierungsserver und das Feldgerät über ein informationstechnisches Netzwerk verbunden werden können, an dem eine Vielzahl von Teilnehmern angeschlossen ist, die sich unter Kenntnis der entsprechenden Teilnehmeradressen kontaktieren können. Es ist damit möglich, beispielsweise eine Kommunikationsverbindung, die auf dem Internetprotokoll beruht (TCP/IP), zu nutzen.

In einer bevorzugten Ausgestaltung des Verfahrens ist vorgesehen, dass in dem Feldgerät und in dem Authentifizierungsserver kryptografische Mittel hinterlegt sind, die es dem Feldgerät und dem Authentifizierungsserver erlauben, verschlüsselt miteinander Daten auszutauschen. Bei diesem kryptografischen Mittel kann es sich beispielsweise um ein sogenanntes "shared secret" handeln, also um einen Schlüssel, von dem beide Kommunikationspartner Kenntnis haben. Das Feldgerät leitet dann mit seinem kryptografischen Mittel aus der Zugangskennung eine verschlüsselte abgeleitete Zugangskennung ab und überträgt diese zum Authentifizierungsserver. Der Authentifizierungsserver kann dann mit seinem korrespondierenden kryptografischen Mittel die verschlüsselte abgeleitete Zugangskennung zur Zugangskennung im Klartext entschlüsseln. Es ist unmittelbar einleuchtend, dass hiermit ein höheres Maß an Sicherheit geschaffen wird, da eine Beeinflussung der Übertragung der Zugangskennung massiv erschwert wird.

Eine Weiterentwicklung des Verfahrens zeichnet sich dadurch aus, dass die Authentifikationsdaten des Authentifizierungsservers auch Rechteumfänge umfassen, die mit einer Zugangskennung verknüpft sind und dass das von dem Authentifizierungsserver an das Feldgerät übermittelte Authentifizierungsergebnis auch den einer Zugangskennung zugeordneten Rechteumfang umfasst. Auf dem Feldgerät wird dann die Information über den Rechteumfang dazu verwendet, dem Endgerät Ressourcen des Feldgerätes nur entsprechend dem verknüpften Rechteumfang verfügbar zu machen. Rechteumfänge können beispielsweise sein "nur Lesezugriff', "beschränkter Lesezugriff', "Schreibzugriff", "beschränkter Schreibzugriff", "Aufruf einer Funktionalität" oder auch nur der "beschränkte Aufruf einer Funktionalität". Die Rechteumfänge können dann auch mit einer Parameterliste und/oder einer Funktionsliste versehen sein. In der Parameterliste können dann beispielsweise die Parameter aufgeführt sein, die von dem Endgerät ausgelesen werden können oder die Parameter, die von dem Endgerät auch schreibend verändert werden können. Entsprechend kann eine Funktionsliste die Funktionen aufführen, die von dem Endgerät auf dem Feldgerät aktiviert werden können.

Bei einer Weiterentwicklung des Verfahrens ist vorgesehen, dass die Rechteumfänge Gruppen von Unterrechten bezeichnen, wobei die Definitionen der Gruppen von Unterrechten entweder auf dem Feldgerät abgelegt sind oder auf dem Authentifizierungsserver abgelegt sind und in letzterem Fall bei Abruf auf das Feldgerät übertragen werden. Dies erleichtert die Verwaltung von Nutzergruppen und deren Berechtigungen. Mögliche Gruppen von Unterrechten können beispielsweise sein User, Operator, Expert, Service, Factory. Ein reiner Verwender (User) des Feldgerätes kann dann beispielsweise nur lesend auf wenige Parameter des Feldgeräts zugreifen, auf wichtige Systemparameter, wie beispielsweise Kalibrierdaten, kann dann entweder nur lesend oder auch überhaupt nicht zugegriffen werden. Ein Endgerät, das mit dem Feldgerät im Rahmen des Herstellungsprozesses verbunden wird (Factory), kann entsprechend auf alle Parameter des Feldgerätes schreibend zugreifen.

Eine bevorzugte Ausgestaltung des Verfahrens zeichnet sich dadurch aus, dass die Authentifikationsdaten des Authentifizierungsservers auch mit einer Zugangskennung verknüpfte Sitzungsattribute umfassen, wobei das von dem Authentifizierungsserver an das Feldgerät übermittelte Authentifizierungsergebnis auch die einer Zugangskennung zugeordneten Sitzungsattribute umfasst. Bei einem solchen Sitzungsattribut kann es sich beispielsweise handeln um die Sitzungssprache, die Sitzungsdauer, die absolute Sitzungszeit, die Anzahl der Sitzungszugriffe oder auch die Sitzungsschnittstelle. Die Sitzungsdauer ist dann die Zeit, nach der das Feldgerät selbstständig die Endgerät-Kommunikationsverbindung unterbricht. Bei der absoluten Sitzungszeit handelt es sich um die Angabe eines Zeitfensters im Tagesverlauf, innerhalb dessen eine Endgerät-Kommunikationsverbindung nur etabliert werden kann, eine Endgerät-Kommunikationsverbindung kann außerhalb des absoluten Zeitfensters nicht etabliert werden. Bei der Sitzungsschnittstelle handelt es sich um die technische Schnittstelle, über die die Endgerät-Kommunikationsverbindung hergestellt wird. Es kann sich beispielsweise um die Angabe einer Schnittstelle in den folgenden Technologien handeln: Bluetooth, drahtloses lokales Netzwerk (WLAN, Wifi), Infrarot (IR), Ethernet.

Die Einführung von Rechteumfängen und auch von Sitzungsattributen ermöglicht es, dass das Feldgerät dem Endgerät eine individualisierte Bedienoberfläche bereitstellt und die Individualisierung der Bedienoberfläche anhand der Rechteumfänge und/oder der Sitzungsattribute erfolgt. Die individualisierte Bedienoberfläche kann dem Endgerät durch das Feldgerät beispielsweise zur Verfügung gestellt werden durch einen individualisierten Webserver. Wenn das Endgerät selbst über keine Anzeige verfügt, kann es auch sinnvoll sein, dass das Feldgerät die individualisierte Bedienoberfläche bereitstellt auf einer physikalischen Anzeige des Feldgerätes selbst. Es kann dann beispielsweise eine Menüstruktur in einer bestimmten Sprache dargestellt werden und es können nur die Parameter und/oder Funktionalitäten angezeigt werden, die dem jeweiligen Rechteumfang entsprechen.

Erfindungsgemäß ist vorgesehen, dass das Feldgerät die Kommunikation mit dem Endgerät zumindest teilweise in einem Protokoll protokolliert und das Protokoll bei Abschluss der Kommunikation, also der entsprechenden Sitzung, an den Authentifizierungsserver übermittelt, wobei das Protokoll auf dem Authentifizierungsserver abgespeichert wird. Alternativ wird das Protokoll während der Kommunikation fortlaufend an den Authentifizierungsserver übermittelt und das Protokoll wird fortlaufend auf dem Authentifizierungsserver abgespeichert wird. Dadurch kann sichergestellt werden, dass jegliche Einflussnahmen auf das Feldgerät nachvollziehbar sind. Auch lässt sich durch Auswertung derartiger Protokolle feststellen, welche Maßnahmen über die Endgeräte-Kommunikationsverbindung durchgeführt worden sind, wodurch sich Rückschlüsse auf beispielsweise Bedienung, Bedienbarkeit, Wartungsintensität und mögliche Fehlerquellen ziehen lassen.

Im Zusammenhang mit der Endgerät-Kommunikationsverbindung ist schon dargelegt worden, dass diese in unterschiedlichen Technologien umgesetzt werden kann. Das Gleiche gilt auch für die Server-Kommunikationsverbindung, die ebenfalls gemäß verschiedener Technologien ausgestaltet sein kann (z. B. Bluetooth, drahtloses lokales Netzwerk, Infrarot, Ethernet), wobei auch verschiedene Technologien gleichzeitig implementiert werden können.

Die eingangs hergeleitete Aufgabe wird auch durch ein System zur sicheren Kommunikation zwischen einem Feldgerät der Automatisierungstechnik und einem Endgerät gelöst. Das System umfasst das Feldgerät und einen Authentifizierungsserver, wobei das Feldgerät mit einem physikalischen Prozess in Wirkzusammenhang steht und das Feldgerät über eine Feldbusschnittstelle mit anderen Feldgeräten und/oder einem Prozessleitsystem in Verbindung bringbar ist. Das Feldgerät weist eine Datenverarbeitungselektronik auf, die ganz unterschiedlich komplex ausgestaltet sein kann. Bei heutigen Feldgeräten werden dazu digitale Signalprozessoren, Mikrocontroller Analog/DigitalWandler, Digital/Analog-Wandler, entsprechende Schnittstellenelektronik und auch Komponenten der analogen Signalverarbeitung verwendet. Das Feldgerät verfügt über eine von der Feldbusschnittstelle verschiedene Endgerät-Kommunikationsschnittstelle und ist mit dieser Endgerät-Kommunikationsschnittstelle mit dem Endgerät verbindbar. Darüber hinaus ist das Feldgerät über eine Server-Kommunikationsschnittstelle mit dem Authentifizierungsserver verbunden.

Das, was zuvor zu entsprechenden Begriffen hinsichtlich des ausführlich dargestellten Verfahrens ausgeführt worden ist, gilt sinngemäß auch für das hier dargestellte System aus Feldgerät und Authentifizierungsserver. Die Datenverarbeitungselektronik ist so ausgestaltet, dass sie über die Endgerät-Kommunikationsschnittstelle eine individuelle Zugangskennung des angeschlossenen Endgeräts empfangen kann. Wenn hier davon die Rede ist, dass die Datenverarbeitungselektronik so ausgestaltet ist, dass mit ihr verschiedene Vorgänge durchführbar sind, dann ist damit gemeint, dass die Datenverarbeitungselektronik ganz speziell so hergerichtet ist, dass sie die beschriebene Funktion ohne Weiteres ausführen kann. Es ist damit keine Datenverarbeitungselektronik gemeint, die noch erst - beispielsweise durch entsprechende und noch zu erfolgende Programmierung - dazu hergerichtet werden muss oder theoretisch so bearbeitet werden könnte, dass sie die beschriebene Funktionalität dann ggf. auch theoretisch ausführen könnte.

Der Authentifizierungsserver ist ganz konkret so ausgestaltet, dass auf ihm Authentifikationsdaten hinterlegt sind, anhand derer die Authentizität der Zugangskennung auf dem Authentifizierungsserver überprüft werden kann und überprüft wird, wobei das resultierende Authentifikationsergebnis von dem Authentifizierungsserver zu dem Feldgerät übertragen wird. Entsprechend ist die Datenverarbeitungselektronik des Feldgerätes so ausgestaltet, dass sie über die Server-Kommunikationsschnittstelle das von dem Authentifizierungsserver ermittelte Authentifikationsergebnis empfängt.

Letztlich ist die Datenverarbeitungselektronik auch konkret so ausgestaltet, dass sie in Abhängigkeit von dem empfangenen Authentifikationsergebnis dem Endgerät Ressourcen des Feldgerätes verfügbar macht.

Insgesamt sind das Feldgerät und der Authentifizierungsserver gegenständlich so ausgestaltet, dass sie das zuvor ausführlich beschriebene Verfahren zur sicheren Kommunikation zwischen dem Feldgerät und dem Endgerät durchführen können.

Bei einer besonders bevorzugten Ausgestaltung des Feldgerätes ist vorgesehen, dass die Server-Kommunikationsschnittstelle, die Endgerät-Kommunikationsschnittstelle und etwaige mit diesen Kommunikationsschnittstellen in Zusammenhang stehende Softwaredienste auf dem Feldgeräte isoliert implementiert sind von der Feldbusschnittstelle und von Softwarediensten, die mit der Feldbusschnittstelle in Zusammenhang stehen. Dadurch kann sichergestellt werden, dass eine Beeinflussung der Feldbusschnittstelle und von mit der Feldbusschnittstelle in Zusammenhang stehender Softwaredienste über die Server-Kommunikationsschnittstelle, über die Endgeräte-Kommunikationsschnittstelle und über etwaige mit diesen Kommunikationsschnittstellen in Zusammenhang stehende Softwaredienste nicht möglich ist.

Im Einzelnen gibt es nun eine Vielzahl von Möglichkeiten, das erfindungsgemäße Verfahren zur sicheren Kommunikation zwischen einem Feldgerät der Automatisierungstechnik und einem mit dem Feldgerät über eine Endgerät-Kommunikationsverbindung verbundenen Endgerät sowie das entsprechende System aus einem Feldgerät und einem Authentifizierungsserver auszugestalten und weiterzubilden. Dazu wird verwiesen einerseits auf die den unabhängigen Patentansprüchen nachgeordneten Patentansprüche, andererseits auf die folgende Beschreibung von Ausführungsbeispielen in Verbindung mit der Zeichnung. In der Zeichnung zeigen:
- Fig. 1: schematisch das erfindungsgemäße Verfahren zur sicheren Kommunikation zwischen einem Feldgerät der Automatisierungstechnik und einem verbundenen Endgerät sowie ein erfindungsgemäßes System aus Feldgerät und Authentifizierungsserver,
- Fig. 2: ein Ausführungsbeispiel des erfindungsgemäßen Verfahrens mit positivem Ergebnis der Authentizitätsprüfung nach Art eines Sequenzdiagramms,
- Fig. 3: ein weiteres Ausführungsbeispiel des erfindungsgemäßen Verfahrens mit negativem Ergebnis der Authentizitätsprüfung nach Art eines Sequenzdiagramms,
- Fig. 4: ein Ausführungsbeispiel des erfindungsgemäßen Verfahrens mit Protokollierung der Kommunikation zwischen Feldgerät und Endgerät nach Art eines Sequenzdiagramms.

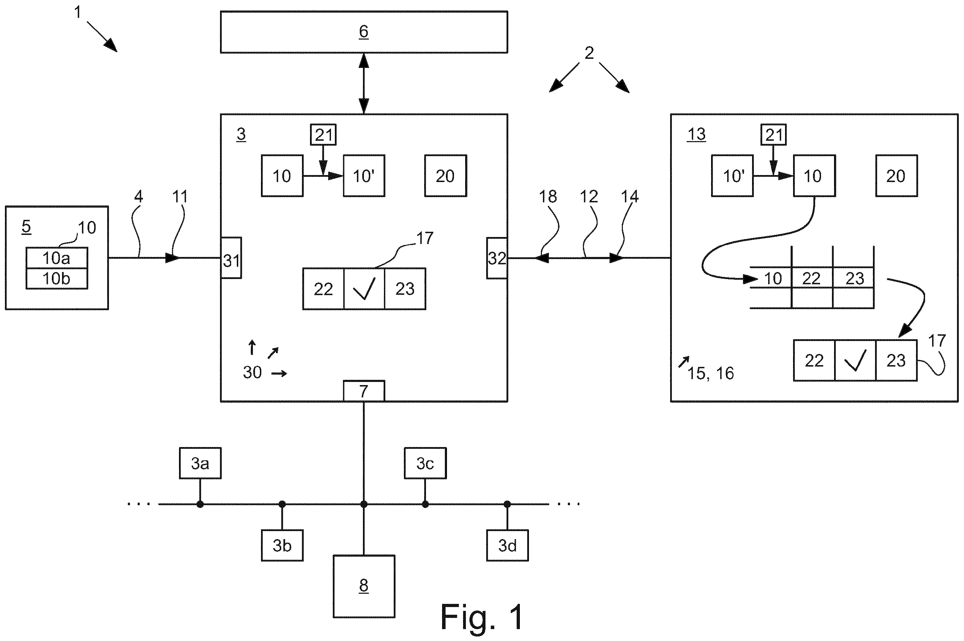

In den Fig. 1 bis 4 ist jeweils dargestellt ein Verfahren 1 zur sicheren Kommunikation zwischen einem Feldgerät 3 der Automatisierungstechnik und einem mit dem Feldgerät 3 über eine Endgerät-Kommunikationsverbindung 4 verbundenen Endgerät 5. In Fig. 1 ist gleichzeitig dargestellt der gerätetechnische Aufbau zur Durchführung des Verfahrens 1, insbesondere dient Fig. 1 der Darstellung eines Systems 2 zur sicheren Kommunikation zwischen einem Feldgerät 3 und einem Endgerät 5.

Wie bereits eingangs beschrieben, steht das Feldgerät 3 mit einem physikalischen Prozess 6 in Wirkzusammenhang, entweder nimmt das Feldgerät 3 Messdaten von dem physikalischen Prozess 6 auf oder wirkt aktiv auf den physikalischen Prozess 6 ein, indem beispielsweise Ventilstellungen, Motordrehzahlen usw., allgemein also Stellgrößen angeschlossener Aktoren, verändert werden. Oft handelt es sich bei dem physikalischen Prozess 6 um eine automatisierungstechnische Anlage in einer industriellen Anwendung.

Das Feldgerät 3 ist über eine Feldbusschnittstelle 7 mit anderen Feldgeräten 3a, 3b, 3c, 3d und mit einem Prozessleitsystem 8 verbunden, nämlich über einen Feldbus 9. Über den Feldbus 9 werden demnach Prozessinformationen ausgetauscht. Im vorliegenden Fall ist der Feldbus 9 gemäß dem HART-Standard realisiert.

Um die Vorteilhaftigkeit des im Folgenden dargestellten Verfahrens 1 und des im Folgenden dargestellten Systems 2 zu verstehen, ist es erforderlich, sich zu vergegenwärtigen, dass in realen automatisierungstechnischen Anwendungen eine Vielzahl von Feldgeräten 3 mit dem physikalischen Prozess 6 in Wirkzusammenhang steht. In umfangreichen Anwendungen können mehrere Hundert Feldgeräte 3 zum Einsatz kommen, die bedarfsweise mit einem oder mehreren Endgeräten 5 in Verbindung zu bringen sind, beispielsweise zur Überprüfung der Funktionalität (Wartung), zum Auslesen von Diagnoseinformationen oder zur Umparametrierung des Gerätes. Kontakt zu dem jeweiligen Feldgerät 3 kann also hergestellt werden von einer Vielzahl von Endgeräten 5. Es ist zunächst naheliegend, in jedem Feldgerät 3 Informationen zu hinterlegen, welches Endgerät 5 überhaupt bekannt ist und demzufolge möglicherweise eine Berechtigung hat, auf das Feldgerät 3 zuzugreifen. Entfallen Endgeräte 5 oder kommen neue Endgeräte 5 hinzu, so müssen praktisch alle betroffenen Feldgeräte 3 über die neue Situation informiert werden und es müssen in ihnen entsprechende Informationen hinterlegt werden. Hier setzt das im Folgenden dargestellte Verfahren 1 und das dargestellte System 2 an.

Es ist zunächst vorgesehen, dass in dem Endgerät 5 eine individuelle Zugangskennung 10 hinterlegt ist und das Endgerät 5 - sofern ein Kontakt zwischen dem Endgerät 5 und dem Feldgerät 3 über die Endgerät-Kommunikationsverbindung 4 besteht, das Endgerät 5 zu dem Feldgerät 3 seine Zugangskennung 10 überträgt 11. Darüber hinaus ist das Feldgerät 3 über eine Server-Kommunikationsverbindung 12 mit einem Authentifizierungsserver 13 verbunden. Das Feldgerät 3 überträgt 14 die Zugangskennung 10 oder eine von der Zugangskennung 10 abgeleitete Zugangskennung 10' zu dem Authentifizierungsserver 13.

Auf dem Authentifizierungsserver 13 sind Authentifikationsdaten 15 hinterlegt, anhand derer die Authentizität der Zugangskennung 10 auf dem Authentifizierungsserver 13 überprüft 16 wird. In Fig. 1 ist in dem schematisch dargestellten Authentifizierungsserver 13 verdeutlicht, dass die Authentifikationsdaten 15 in einer Tabelle hinterlegt sind. Im vorliegenden Fall ist die Zugangskennung 10 in der Tabelle aufgeführt, sodass die Authentizität der Zugangskennung 10 bestätigt werden kann, also das resultierende Authentifikationsergebnis 17 positiv ist. Das resultierende Authentifikationsergebnis 17 wird dann von dem Authentifizierungsserver 13 über die Server-Kommunikationsverbindung 12 zu dem Feldgerät 3 übertragen 18. Das Feldgerät hat nun - und erst jetzt - Kenntnis von dem Authentifikationsergebnis 17.

Das Feldgerät 3 macht nun in Abhängigkeit von dem auf das Feldgerät 3 übertragenen Authentifikationsergebnis 17 dem Endgerät 5 Ressourcen des Feldgerätes 3 verfügbar. Ressourcen des Feldgerätes 3 können Daten aber auch Funktionalitäten sein.

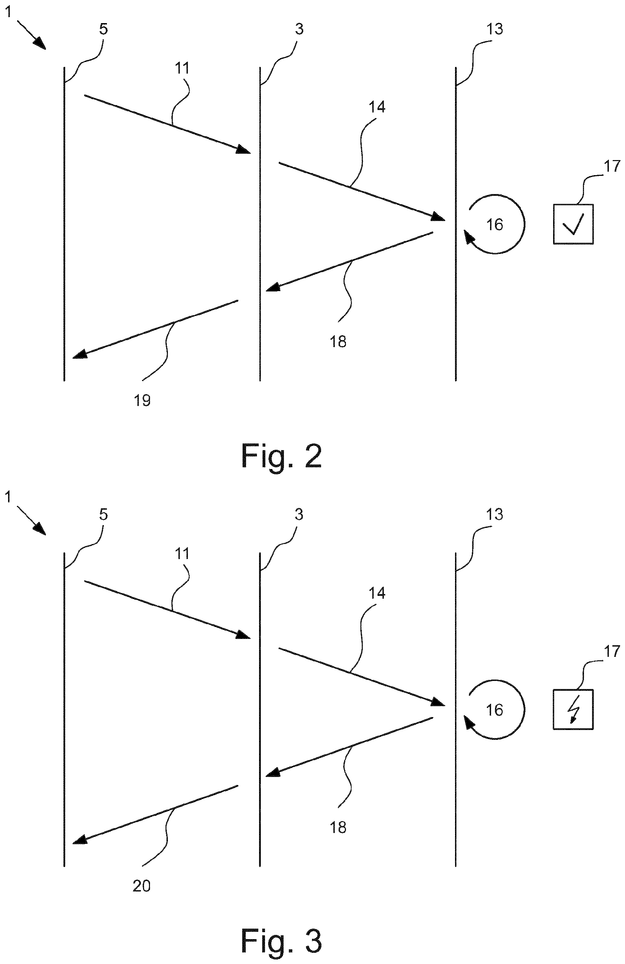

Da sich der zeitliche Verlauf des Verfahrens 1 innerhalb der gegenständlichen Darstellung von Fig. 1 nicht einfach erkennen lässt, sind in den Fig. 2 und 3 die Abläufe nochmals in Form von Sequenzdiagrammen dargestellt. Die linke vertikale Linie stellt das Endgerät 5 dar, die mittlere vertikale Linie das Feldgerät 3 und die rechte vertikale Linie den Authentifizierungsserver 13. In Fig. 2 wie in Fig. 3 ist dargestellt, dass das Endgerät 5 einen Zugang zu dem Feldgerät 3 anfragt. In Fig. 2 ist das Ergebnis 17 der Überprüfung der Authentizität positiv, in Fig. 3 ist das Ergebnis negativ.

Das Verfahren 1 beginnt damit, dass das Endgerät 5 seine Zugangskennung 10 zu dem Feldgerät 3 überträgt. Das Feldgerät 3 ist mit dem Authentifizierungsserver 13 verbunden und übertragt 14 die Zugangskennung 10 oder eine abgeleitete Zugangskennung 10' zu dem Authentifizierungsserver 13. Der Authentifizierungsserver 13 erhält also entweder die Zugangskennung 10 direkt oder er schlussfolgert aus der abgeleiteten Zugangskennung 10' auf die originäre Zugangskennung 10.

Anhand der auf dem Authentifizierungsserver 13 hinterlegten Authentifikationsdaten 15 überprüft 16 der Authentifizierungsserver 13 nunmehr, ob die Zugangskennung 10 bekannt ist. Das Authentifikationsergebnis 17 ist im in Fig. 2 dargestellten Fall positiv. Der Authentifizierungsserver 13 überträgt 18 nun das Authentifikationsergebnis 17 zu dem Feldgerät 3. Das Feldgerät 3 macht dem Endgerät 5 daraufhin bestimmte Ressourcen verfügbar 19.

Davon abweichend ist das Authentifikationsergebnis 17 in dem Ausführungsbeispiel gemäß Fig. 3 negativ. Auch hier wird dem Feldgerät 3 das - negative - Authentifikationsergebnis 17 von dem Authentifizierungsserver 13 mitgeteilt 18, jedoch macht das Feldgerät 3 dem Endgerät 5 keinerlei Ressourcen verfügbar. Im vorliegenden Fall signalisiert 20 es dem Endgerät 5 lediglich, dass eine Kommunikation nicht zustande kommt. Eine solche - negative - Rückmeldung von dem Feldgerät 3 an das Endgerät 5 kann auch einfach unterbleiben.

In Fig. 1 ist bei dem Endgerät 5 zusätzlich dargestellt, dass als individuelle Zugangskennung 10 ein individueller Endgerätename 10a und ein individuelles Endgerätepasswort 10b hinterlegt sind. Alternativ kann es sich bei der Zugangskennung 10 auch um einen individuellen Verwendernamen 10a und ein individuelles Verwenderpasswort 10b handeln. Dies hat beispielsweise den Vorteil, dass verschiedene Benutzer des Endgerätes 5, wenn diese über verschiedene Verwendernamen 10a und verschiedene Verwenderpassworte 10b verfügen, voneinander unterscheidbar sind.

In Fig. 1 ist ferner hinsichtlich des Feldgerätes 3 und hinsichtlich des Authentifizierungsservers 13 dargestellt, dass die Adresse 20 des Authentifizierungsservers im Feldgerät 3 hinterlegt ist, wobei unter Verwendung der Adresse 20 des Authentifizierungsservers 13 die Server-Kommunikationsverbindung 12 hergestellt wird.

Aus Fig. 1 ist ferner ersichtlich, dass in dem Feldgerät 3 und in dem Authentifizierungsserver 13 kryptografische Mittel 21 hinterlegt sind, die es dem Feldgerät 3 und dem Authentifizierungsserver 13 erlauben, verschlüsselt miteinander Daten auszutauschen. Das Feldgerät 3 leitet mit seinem kryptografischen Mittel 21 aus der Zugangskennung 10 eine verschlüsselte abgeleitete Zugangskennung 10' ab und überträgt 14 diese zum Authentifizierungsserver 13. Der Authentifizierungsserver 13 entschlüsselt mit seinem kryptografischen Mittel 21 die verschlüsselte abgeleitete Zugangskennung 10' zur Zugangskennung 10.

In Fig. 1 ist bei dem Authentifizierungsserver 13 ferner dargestellt, dass die Authentifikationsdaten 15 des Authentifizierungsservers 13 auch mit einer Zugangskennung 10 verknüpfte Rechteumfänge 22 umfassen und dass das von dem Authentifizierungsserver 13 an das Feldgerät 3 übermittelte Authentifizierungsergebnis 17 auch den einer Zugangskennung 10 zugeordneten Rechteumfang 22 umfasst. Die Authentifikationsdaten 15 sind in Fig. 1 bei dem Authentifizierungsserver 13 durch eine Tabelle dargestellt. Verknüpft sind hier die Werte, die in einer Zeile angeordnet sind.

Aus Fig. 1 ist ebenfalls ersichtlich, dass die Authentifikationsdaten 15 des Authentifizierungsservers 13 auch mit einer Zugangskennung 10 verknüpfte Sitzungsattribute 23 umfassen und dass das von dem Authentifizierungsserver 13 an das Feldgerät 3 übermittelte Authentifizierungsergebnis 17 auch die einer Zugangskennung 10 zugeordneten Sitzungsattribute 23 umfasst. Diese Sitzungsattribute 23 werden dann auch von dem Authentifizierungsserver 13 zurück an das Feldgerät 3 übermittelt 18.

Das Feldgerät 3 hat Kenntnis von der Bedeutung der Rechteumfänge 22 bzw. der Sitzungsattribute 23, indem entweder entsprechende Definitionen direkt in dem Feldgerät 3 abgelegt sind oder indem die Definitionen auf dem Authentifizierungsserver 13 abgelegt sind und ebenfalls mit zu dem Feldgerät 3 übermittelt 18 werden.

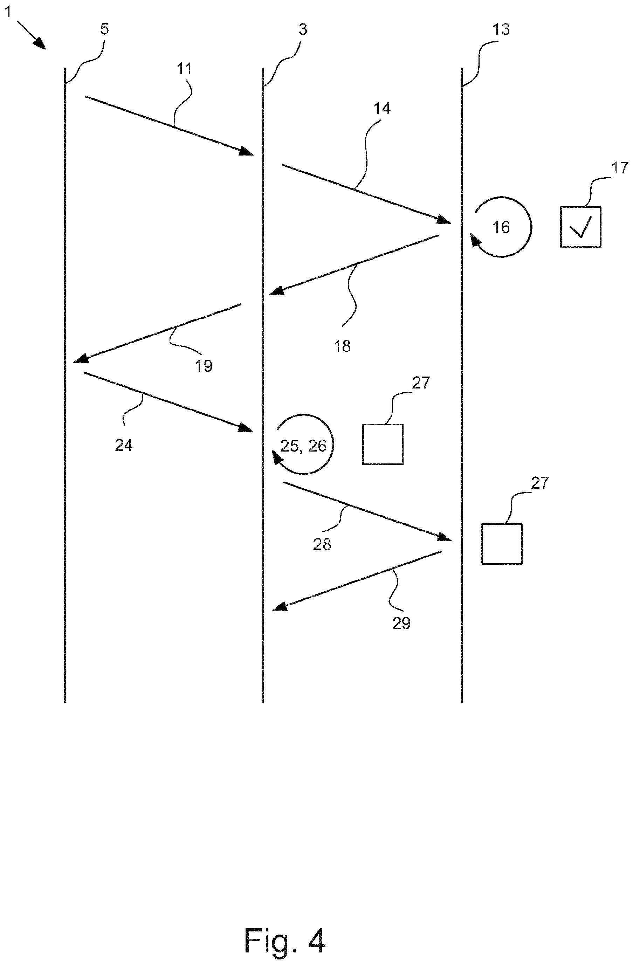

Fig. 4 verdeutlicht eine weitere besondere Funktion des Verfahrens, die durch den Einsatz des Authentifizierungsservers 13 möglich wird. Der obere Teil des Sequenzdiagramms entspricht der Darstellung gemäß Fig. 2. Das Endgerät 5 hat eine Kommunikationsanfrage an das Feldgerät 3 abgesetzt, das Endgerät 5 konnte daraufhin von dem Authentifizierungsserver 13 nach Überprüfung 16 der Authentizität erkannt werden, sodass dem Endgerät 5 grundsätzlich Ressourcen des Feldgeräts 3 verfügbar gemacht werden 19. In Fig. 4 fordert 24 das Endgerät 5 eine Ressource des Feldgeräts 3 an und die Ressourcenanforderung 24 wird auf dem Feldgerät 3 nachfolgend bearbeitet 25. Worauf es hier nun ankommt, ist, dass die Kommunikation zwischen Feldgerät 3 und Endgerät 5 in einem Protokoll 27 protokolliert 26 wird. Das Protokoll 27 wird nach Abschluss der Kommunikation zwischen dem Endgerät 5 und dem Feldgerät 3 an den Authentifizierungsserver 13 übermittelt 28 und dort abgespeichert. In dem dargestellten Ausführungsbeispiel meldet 29 der Authentifizierungsserver 13 noch die erfolgreiche Speicherung des Protokolls 27 an das Feldgerät 3. Dies ist nicht zwingend erforderlich.

Essentiell für die sichere Kommunikation zwischen dem Feldgerät 3 und dem Endgerät 5 ist also ein System 2 umfassend das Feldgerät 3 und den Authentifizierungsserver 13, wobei das Feldgerät 3 über die Feldbusschnittstelle 7 mit anderen Feldgeräten 3a, 3b, 3c, 3d und einem Prozessleitsystem 8 in Verbindung bringbar ist. Das Feldgerät 3 umfasst eine Datenverarbeitungselektronik 30, die praktisch die gesamte Elektronik innerhalb des Feldgeräts 3 umfasst. Das Feldgerät 3 weist eine von der Feldbusschnittstelle 7 verschiedene Endgerät-Kommunikationsschnittstelle 31 auf, über die es mit dem Endgerät 5 verbindbar ist. Das Feldgerät 3 ist über eine Server-Kommunikationsschnittstelle 32 mit dem Authentifizierungsserver 13 verbunden. Die Datenverarbeitungselektronik 30 ist so ausgestaltet, dass sie über die Endgerät-Kommunikationsschnittstelle 31 eine individuelle Zugangskennung 10 des angeschlossenen Endgeräts 5 empfangen kann. Die Datenverarbeitungselektronik 30 ist ferner so ausgestaltet, dass sie über die Server-Kommunikationsschnittstelle 32 die Zugangskennung 10 oder eine von der Zugangskennung 10 abgeleitete Zugangskennung 10' zu dem Authentifizierungsserver 13 übertragen kann und überträgt.

Auf dem Authentifizierungsserver 13 sind Authentifikationsdaten 15 hinterlegt, anhand derer die Authentizität der Zugangskennung 10 auf dem Authentifizierungsserver 13 überprüft 16 wird,

Die Datenverarbeitungselektronik 30 ist ferner so ausgestaltet, dass sie über die Server-Kommunikationsschnittstelle 32 das von dem Authentifizierungsserver 13 ermitteltes Authentifikationsergebnis 17 empfangen kann. Schließlich ist die Datenverarbeitungselektronik 30 so ausgestaltet, dass sie in Abhängigkeit von dem empfangenen Authentifikationsergebnis 17 dem Endgerät 5 Ressourcen des Feldgeräts 3 verfügbar 19 macht.

Ein vorrangiges Ziel ist es, das Feldgerät 3 so auszugestalten, dass die Feldbusschnittstelle 7 und Softwaredienste, die mit der Feldbusschnittstelle 7 in Zusammenhang stehen, nicht beeinflusst werden können von sonstigen Komponenten des Feldgerätes 3. Nur so kann sichergestellt werden, dass unter keinen Umständen die Anlagensicherheit gefährdet ist, insbesondere nicht durch Eingriffe über die Endgeräte-Kommunikationsschnittstelle 31 oder die Server-Kommunikationsschnittstelle 32. Bei der dargestellten Realisierung des Feldgerätes 3 sind die Server-Kommunikationsschnittstelle 32, die Endgeräte-Kommunikationsschnittstelle 31 und etwaige mit diesen Kommunikationsschnittstellen 31, 32 in Zusammenhang stehende Softwaredienste auf dem Feldgerät 3 isoliert implementiert, insbesondere also isoliert implementiert von der Feldbusschnitte 7 und von Softwarediensten, die mit der Feldbusschnittstelle 7 in Zusammenhang stehen. Dadurch ist eine Beeinflussung der Feldbusschnittstelle 7 und von mit der Feldbusschnittstelle 7 in Zusammenhang stehenden Softwarediensten über die Server-Kommunikationsschnittstelle 32, über die Endgeräte-Kommunikationsschnittstelle 31 und über etwaige mit diesen Kommunikationsschnittstellen 31, 32 in Zusammenhang stehende Softwaredienste nicht möglich.

### Bezugszeichen

- 1: Verfahren
- 2: System
- 3: Feldgerät
- 4: Endgerät-Kommunikationsverbindung
- 5: Endgerät
- 6: Prozess
- 7: Feldbusschnittstelle
- 8: Prozessleitsystem
- 9: Feldbus
- 10: individuelle Zugangskennung
- 10': abgeleitete individuelle Zugangskennung
- 10a: Endgerätename / Verwendername
- 10b: Endgerätepasswort / Verwenderpasswort
- 11: Übertragen der Zugangskennung
- 12: Server-Kommunikationsverbindung
- 13: Authentifizierungsserver
- 14: Übertragen der Zugangskennung
- 15: Authentifikationsdaten
- 16: Überprüfen der Authentizität
- 17: Authentifikationsergebnis
- 18: Übertragen des Authentifikationsergebnisses
- 19: Verfügbarmachen von Ressourcen
- 20: Adresse des Authentifizierungsservers
- 21: kryptografische Mittel
- 22: Rechteumfang
- 23: Sitzungsattribute
- 24: Anfordern einer Feldgeräte-Ressource
- 25: Bearbeitung der Ressourcenanforderung
- 26: Protokollierung der Kommunikation
- 27: Protokoll
- 28: Übermittlung des Protokolls
- 29: Meldung der erfolgreichen Protokollspeicherung
- 30: Datenverarbeitungselektronik
- 31: Endgerät-Kommunikationsschnittstelle
- 32: Server-Kommunikationsschnittstelle

## Patentansprüche

1. Verfahren (1) zur sicheren Kommunikation zwischen einem Feldgerät (3) der Automatisierungstechnik und einem mit dem Feldgerät (3) über eine Endgerät-Kommunikationsverbindung (4) verbundenen Endgerät (5), wobei das Feldgerät (3) mit einem physikalischen Prozess (6) in Wirkzusammenhang steht und das Feldgerät (3) über eine Feldbusschnittstelle (7) mit anderen Feldgeräten (3a, 3b, 3c, 3d) und/oder einem Prozessleitsystem (8) in Verbindung bringbar ist zum Austausch von Prozessinformationen, wobei in dem Endgerät (5) eine individuelle Zugangskennung (10) hinterlegt ist und das Endgerät (5) zu dem Feldgerät (3) seine Zugangskennung (10) überträgt (11), wobei das Feldgerät (3) über eine Server-Kommunikationsverbindung (12) mit einem Authentifizierungsserver (13) verbunden ist und das Feldgerät (3) die Zugangskennung (10) oder eine von der Zugangskennung (10) abgeleitete Zugangskennung (10') zu dem Authentifizierungsserver (13) überträgt (14), wobei auf dem Authentifizierungsserver (13) Authentifikationsdaten (15) hinterlegt sind, anhand derer die Authentizität der Zugangskennung (10) auf dem Authentifizierungsserver (13) überprüft (16) wird, und dass das resultierende Authentifikationsergebnis (17) von dem Authentifizierungsserver (13) über die Server-Kommunikationsverbindung (12) zu dem Feldgerät (3) übertragen (18) wird und wobei in Abhängigkeit von dem auf das Feldgerät (3) übertragenen Authentifikationsergebnis (17) dem Endgerät (5) Ressourcen des Feldgerätes (3) verfügbar gemacht (19) werden,
**dadurch gekennzeichnet,**
**dass** das Feldgerät (3) die Kommunikation mit dem Endgerät (5) zumindest teilweise in einem Protokoll (27) protokolliert (26), sodass Einflussnahmen auf das Feldgerät (3) nachvollziehbar sind, wobei entweder das Protokoll (27) bei Abschluss der Kommunikation an den Authentifizierungsserver (13) übermittelt (28) und das Protokoll (27) auf dem Authentifizierungsserver (13) abgespeichert wird, oder wobei alternativ das Protokoll (27) während der Kommunikation fortlaufend an den Authentifizierungsserver (13) übermittelt (28) und das Protokoll (27) auf dem Authentifizierungsserver (13) abgespeichert wird.

2. Verfahren (1) nach Anspruch 1, **dadurch gekennzeichnet, dass** als individuelle Zugangskennung (10) ein individueller Endgerätename (10a) und ein individuelles Endgerätepasswort (10b) hinterlegt sind und/oder dass die individuelle Zugangskennung (10) einen individuellen Verwendernamen (10a) und ein individuelles Verwenderpasswort (10b) eines Verwenders des mit dem Feldgerät (2) in Verbindung stehenden Endgeräts (5) aufweist.

3. Verfahren (1) nach Anspruch 1 oder 2, **dadurch gekennzeichnet, dass** in dem Feldgerät (3) die Adresse (20) des Authentifizierungsservers (13) hinterlegt ist und unter Verwendung der Adresse (20) des Authentifizierungsservers (13) die Server-Kommunikationsverbindung (12) hergestellt wird.

4. Verfahren (1) nach einem der Ansprüche 1 bis 3, **dadurch gekennzeichnet, dass** in dem Feldgerät (3) und in dem Authentifizierungsserver (13) kryptografische Mittel (21) hinterlegt sind, die es dem Feldgerät (3) und dem Authentifizierungsserver (13) erlauben, verschlüsselt miteinander Daten auszutauschen, dass das Feldgerät (3) mit seinem kryptografischen Mittel (21) aus der Zugangskennung (10) eine verschlüsselte abgeleitete Zugangskennung (10') ableitet und zum Authentifizierungsserver (13) überträgt (14) und dass der Authentifizierungsserver (13) mit seinem kryptografischen Mittel (21) die verschlüsselte abgeleitete Zugangskennung (10') zur Zugangskennung (10) entschlüsselt.

5. Verfahren (1) nach einem der Ansprüche 1 bis 4, **dadurch gekennzeichnet, dass** die Authentifikationsdaten (15) des Authentifizierungsservers (13) auch mit einer Zugangskennung (10) verknüpfte Rechteumfänge (22) umfassen und dass das von dem Authentifizierungsserver (13) an das Feldgerät (3) übermittelte Authentifizierungsergebnis (17) auch den einer Zugangskennung (10) zugeordneten Rechteumfang (22) umfasst.

6. Verfahren (1) nach Anspruch 5, **dadurch gekennzeichnet, dass** ein Rechteumfang (22) einer der folgenden Rechteumfänge (22) ist: nur Lesezugriff, beschränkter Lesezugriff, Schreibzugriff, beschränkter Schreibzugriff, Funktionalitätsaufruf, insbesondere wobei die Rechteumfänge mit einer Parameterliste und/oder Funktionsliste versehen sind.

7. Verfahren (1) nach Anspruch 5 oder 6, **dadurch gekennzeichnet, dass** die Rechteumfänge (22) Gruppen von Unterrechten bezeichnen, wobei die Definitionen der Gruppen von Unterrechten entweder auf dem Feldgerät (3) abgelegt sind oder auf dem Authentifizierungsserver (13) abgelegt sind und bei Abruf auf das Feldgerät (3) übertragen werden, insbesondere wobei mögliche Gruppen von Unterrechten sind: User, Operator, Expert, Service, Factory.

8. Verfahren (1) nach einem der Ansprüche 1 bis 7, **dadurch gekennzeichnet, dass** die Authentifikationsdaten (15) des Authentifizierungsservers (13) auch mit einer Zugangskennung (10) verknüpfte Sitzungsattribute (23) umfassen und dass das von dem Authentifizierungsserver (13) an das Feldgerät (3) übermittelte Authentifizierungsergebnis (17) auch die einer Zugangskennung (10) zugeordneten Sitzungsattribute (23) umfasst, insbesondere wobei ein Sitzungsattribut (23) sein kann: Sitzungssprache, Sitzungsdauer, absolute Sitzungszeit, Anzahl der Sitzungszugriffe, Sitzungsschnittstelle.

9. Verfahren (1) nach einem der Ansprüche 5 bis 8, **dadurch gekennzeichnet, dass** das Feldgerät (3) dem Endgerät (5) eine individualisierte Bedienoberfläche bereitstellt und die Individualisierung der Bedienoberfläche anhand der Rechteumfänge (22) und/oder der Sitzungsattribute (23) erfolgt, insbesondere wobei das Feldgerät (3) dem Endgerät (5) die individualisierte Bedienoberfläche durch einen individualisierten Webserver bereitstellt oder das Feldgerät (3) die Bedienoberfläche einer physikalischen Anzeige des Feldgeräts (3) selbst individualisiert.

10. Verfahren (1) nach einem der Ansprüche 1 bis 9, **dadurch gekennzeichnet, dass** die Endgerät-Kommunikationsverbindung (4) und/oder die Server-Kommunikationsverbindung (12) gemäß einer der folgenden Technologien ausgebildet ist: Bluetooth, drahtloses lokales Netzwerk (WLAN), Infrarot (IR), Ethernet.

11. System (2) zur sicheren Kommunikation zwischen einem Feldgerät (3) der Automatisierungstechnik und einem Endgerät (5), umfassend das Feldgerät (3) und einen Authentifizierungsserver (13), wobei das Feldgerät (3) mit einem physikalischen Prozess (6) in Wirkzusammenhang steht und das Feldgerät (3) über eine Feldbusschnittstelle (7) mit anderen Feldgeräten (3a, 3b, 3c, 3d) und/oder einem Prozessleitsystem (8) in Verbindung bringbar ist, wobei das Feldgerät (3) eine Datenverarbeitungselektronik (30) umfasst, wobei das Feldgerät (3) über eine von der Feldbusschnittstelle (7) verschiedene Endgerät-Kommunikationsschnittstelle (31) mit dem Endgerät (5) verbindbar ist und wobei das Feldgerät (3) über eine Server-Kommunikationsschnittstelle (32) mit dem Authentifizierungsserver (13) verbunden ist, wobei die Datenverarbeitungselektronik (30) so ausgestaltet ist, dass sie über die Endgerät-Kommunikationsschnittstelle (31) eine individuelle Zugangskennung (10) des angeschlossenen Endgeräts (5) empfangen kann, wobei die Datenverarbeitungselektronik (30) so ausgestaltet ist, dass sie über die Server-Kommunikationsschnittstelle (32) die Zugangskennung (10) oder eine von der Zugangskennung (10) abgeleitete Zugangskennung (10') zu dem Authentifizierungsserver (13) überträgt, wobei auf dem Authentifizierungsserver (13) Authentifikationsdaten (15) hinterlegt sind, anhand derer die Authentizität der Zugangskennung (10) auf dem Authentifizierungsserver (13) überprüft (16) wird, wobei die Datenverarbeitungselektronik (30) so ausgestaltet ist, dass sie über die Server-Kommunikationsschnittstelle (32) ein von dem Authentifizierungsserver (13) ermitteltes Authentifikationsergebnis (17) empfängt und wobei die Datenverarbeitungselektronik (30) so ausgestaltet ist, dass sie in Abhängigkeit von dem empfangenen Authentifikationsergebnis (17) dem Endgerät (5) Ressourcen des Feldgerätes (3) verfügbar (19) macht,
**dadurch gekennzeichnet,**
**dass** das Feldgerät (3) so ausgestaltet ist, dass es die Kommunikation mit dem Endgerät (5) zumindest teilweise in einem Protokoll (27) protokolliert (26), wobei entweder das Protokoll (27) bei Abschluss der Kommunikation an den Authentifizierungsserver (13) übermittelt (28) und das Protokoll (27) auf dem Authentifizierungsserver (13) abgespeichert wird, oder wobei alternativ das Protokoll (27) während der Kommunikation fortlaufend an den Authentifizierungsserver (13) übermittelt (28) und das Protokoll (27) auf dem Authentifizierungsserver (13) abgespeichert wird.

12. System (2) nach Anspruch 11, **dadurch gekennzeichnet, dass** das Feldgerät (3) und der Authentifizierungsserver (13) so ausgestaltet sind, dass sie das Verfahren (1) gemäß den Merkmalen des Kennzeichnungsteils wenigstens eines Anspruchs der Ansprüche 2 bis 10 durchführen können.

13. System (2) nach Anspruch 11 oder 12, **dadurch gekennzeichnet, dass** die Server-Kommunikationsschnittstelle (32), die Endgeräte-Kommunikationsschnittstelle (31) und etwaige mit diesen Kommunikationsschnittstellen (31, 32) in Zusammenhang stehende Softwaredienste auf dem Feldgerät (3) isoliert implementiert sind von der Feldbusschnittstelle (7) und von Softwarediensten, die mit der Feldbusschnittstelle (7) in Zusammenhang stehen, sodass insbesondere eine Beeinflussung der Feldbusschnittstelle (7) und von mit der Feldbusschnittstelle (7) in Zusammenhang stehender Softwaredienste über die Server-Kommunikationsschnittstelle (32), über die Endgeräte-Kommunikationsschnittstelle (31) und über etwaige mit diesen Kommunikationsschnittstellen (31, 32) in Zusammenhang stehende Softwaredienste nicht möglich ist.

## Claims

1. Method (1) for secure communication between a field device (2) in automation technology and an end device (5) connected to the field device (2) via an end device communication link (4), wherein the field device (3) has a cause-effect relationship with a physical process (6) and the field device (3) can be connected via a field bus interface (7) to other field devices (3a, 3b, 3c, 3d) and/or a process control system (8) for the exchange of process information, wherein an individual access code (10) is stored in the end device (5) and the end device (5) transmits (11) its access code (10) to the field device (3), wherein the field device (3) is connected to an authentication server (13) via a server communication link (12) and the field device (3) transmits (14) the access code (10) or an access code (10') derived from the access code (10) to the authentication server (13), wherein authentication data (15) is stored on the authentication server (13), on the basis of which the authenticity of the access code (10) is checked (16) on the authentication server (13), and that the resulting authentication result (17) is transmitted (18) from the authentication server (13) via the server communication link (12) to the field device (3), and wherein, depending on the authentication result (17) transmitted to the field device (3), resources of the field device (3) are made available (19) to the end device (5),
**characterized in**
**that** the field device (3) at least partially logs (26) the communication with the end device (5) in a protocol (27), so that influence on the field device (3) is trackable, wherein either the protocol (27) is transmitted (28) to the authentication server (13) upon completion of the communication and the protocol (27) is stored on the authentication server (13), or alternatively wherein the protocol (27) is continuously transmitted (28) to the authentication server (13) during communication and the protocol (27) is stored on the authentication server (13)

2. Method (1) according to claim 1, **characterized in that** an individual end device name (10a) and an individual end device password (10b) are stored as an individual access code (10) and/or that the individual access code (10) has an individual user name (10a) and an individual user password (10b) of a user of the end device (5) connected to the field device (2).

3. Method (1) according to claim 1 or 2, **characterized in that** the address (20) of the authentication server (13) is stored in the field device (3) and the server communication link (12) is established using the address (20) of the authentication server (13).

4. Method (1) according to any one of claims 1 to 3, **characterized in that** cryptographic means (21) are stored in the field device (3) and in the authentication server (13), which means (21) allow the field device (3) and the authentication server (13) to exchange encrypted data with one another, that the field device (3) with its cryptographic means (21) derives an encrypted derived access code (10') from the access code (10) and transmits (14) it to the authentication server (13), and that the authentication server (13) with its cryptographic means (21) decrypts the encrypted derived access code (10') to the access code (10).

5. Method (1) according to any one of claims 1 to 4, **characterized in that** the authentication data (15) of the authentication server (13) also comprises scopes of rights (22) associated with an access code (10) and that the authentication result (17) transmitted by the authentication server (13) to the field device (3) also comprises the scopes of rights (22) associated with an access code (10).

6. Method (1) according to claim 5, **characterized in that** a scope of rights (22) is one of the following scope of rights (22): read access only, restricted read access, write access, restricted write access, function request, in particular wherein the scope of rights is provided with a parameter list and/or function list.

7. Method (1) according to claim 5 or 6, **characterized in that** the scopes of rights (22) designate groups of sub-rights, wherein the definitions of the groups of sub-rights are either stored on the field device (3) or stored on the authentication server (13) and are transmitted to the field device (3) upon request, in particular wherein possible groups of sub-rights are user, operator, expert, service, factory.

8. Method (1) according to any one of claims 1 to 7, **characterized in that** the authentication data (15) of the authentication server (13) also comprises session attributes (23) associated with an access code (10), and that the authentication result (17) transmitted from the authentication server (13) to the field device (3) also comprises the session attributes (23) associated with an access code (10), in particular where a session attribute (23) can be: session language, session duration, absolute session time, number of session accesses, session interface.

9. Method (1) according to any one of claims 5 to 8, **characterized in that** the field device (3) provides the end device (5) with an individualized user interface and the user interface is individualized on the basis of the scopes of rights (22) and/or the session attributes (23), in particular wherein the field device (3) provides the end device (5) with the individualized user interface by means of an individualized web server or the field device (3) individualizes the user interface of a physical display of the field device (3) itself.

10. Method (1) according to any one of claims 1 to 9, **characterized in that** the end device communication link (4) and/or the server communication link (12) is/are designed according to one of the following technologies: Bluetooth, wireless local area network (WLAN), infrared (IR), Ethernet.

11. System (2) for secure communication between a field device (3) of automation technology and an end device (5), comprising the field device (3) and an authentication server (13), wherein the field device (3) has a cause-effect relationship with a physical process (6) and the field device (3) can be connected to other field devices (3a, 3b, 3c, 3d) and/or a process control system (8), wherein the field device (3) comprises data processing electronics (30), wherein the field device (3) can be connected to the end device (5) via an end device communication interface (31) different from the field bus interface (7), and wherein the field device (3) is connected to the authentication server (13) via a server communication interface (32),
wherein the data processing electronics (30) is designed such that it can receive an individual access code (10) of the connected end device (5) via the end communication interface (31),
wherein the data processing electronics (30) is designed to transmit the access code (10) or an access code (10') derived from the access code (10) to the authentication server (13) via the server communication interface (32), wherein authentication data (15) is stored on the authentication server (13), on the basis of which the authenticity of the access code (10) is checked (16) on the authentication server (13),
wherein the data processing electronics (30) is designed to receive an authentication result (17) determined by the authentication server (13) via the server communication interface (32) and
wherein the data processing electronics (30) is designed such that it makes resources of the field device (3) available (19) to the end device (5) depending on the received authentication result (17),
**characterized in**
**that** the field device (3) is designed such that it at least partially logs (26) the communication with the end device (5) in a protocol (27), wherein either the protocol (27) is transmitted (28) to the authentication server (13) upon completion of the communication and the protocol (27) is stored on the authentication server (13), or alternatively wherein the protocol (27) is continuously transmitted (28) to the authentication server (13) during communication and the protocol (27) is stored on the authentication server (13)

12. System (2) according to claim 11, **characterized in that** the field device (3) and the authentication server (13) are designed such that they can carry out the method (1) according to the features of the characterizing portion of at least one claim of claims 2 to 10.

13. System (2) according to claim 11 or 12, **characterized in that** the server communication interface (32), the end device communication interface (31) and any software services associated with these communication interfaces (31, 32) are implemented on the field device (3) isolated from the field bus interface (7) and from software services associated with the field bus interface (7), so that in particular an influencing of the field bus interface (7) and of software services associated with the field bus interface (7) via the server communication interface (32), via the end device communication interface (31) and via any software services associated with these communication interfaces (31, 32) is not possible.

## Revendications

1. Procédé (1) de communication sécurisée entre un appareil de terrain (3) de la technique de l'automatisation et un terminal (5) relié à l'appareil de terrain (3) par une liaison de communication de terminal (4), dans lequel l'appareil de terrain (3) est en relation fonctionnelle avec un processus physique (6), et l'appareil de terrain (3) peut être mis en communication par l'intermédiaire d'une interface de bus de terrain (7) avec d'autres appareils de terrain (3a, 3b, 3c, 3d) et/ou un système de contrôle de processus (8) pour échanger des informations de processus, dans lequel un identifiant d'accès individuel (10) est mémorisé sur le terminal (5), et le terminal (5) transmet (11) son identifiant d'accès (10) à l'appareil de terrain (3), dans lequel l'appareil de terrain (3) est relié par une liaison de communication de serveur (12) à un serveur d'authentification (13), et l'appareil de terrain (3) transmet (14) l'identifiant d'accès (10) ou un identifiant d'accès (10') déduit de l'identifiant d'accès (10) au serveur d'authentification (13), dans lequel des données d'authentification (15) sont mémorisées sur le serveur d'authentification (13) à l'aide desquelles l'authenticité de l'identifiant d'accès (10) sur le serveur d'authentification (13) est vérifiée (16), et le résultat d'authentification (17) qui en découle est transmis (18) du serveur d'authentification (13) par la liaison de communication de serveur (12) à l'appareil de terrain (3), et dans lequel des ressources de l'appareil de terrain (3) sont mises à la disposition (19) du terminal (5) en fonction du résultat d'authentification (17) transmis à l'appareil de terrain (3),
**caractérisé en ce que** l'appareil de terrain (3) consigne (26) la communication avec le terminal (5) au moins partiellement dans un protocole (27) de sorte que des influences exercées sur l'appareil de terrain (3) sont traçables, dans lequel soit le protocole (27) est transmis (28) à la fin de la communication au serveur d'authentification (13) et le protocole (27) est stocké sur le serveur d'authentification (13), soit en variante le protocole (27) est transmis (28) pendant la communication en continu au serveur d'authentification (13) et le protocole (27) est stocké sur le serveur d'authentification (13).

2. Procédé (1) selon la revendication 1, **caractérisé en ce qu'**un nom de terminal individuel (10a) et un mot de passe de terminal individuel (10b) sont mémorisés comme identifiant d'accès individuel (10), et/ou **en ce que** l'identifiant d'accès individuel (10) présente un nom d'utilisateur individuel (10a) et un mot de passe d'utilisateur individuel (10b) d'un utilisateur du terminal (5) en communication avec l'appareil de terrain (2).

3. Procédé (1) selon la revendication 1 ou 2, **caractérisé en ce que** l'adresse (20) du serveur d'authentification (13) est mémorisée sur l'appareil de terrain (3), et la liaison de communication de serveur (12) est établie en utilisant l'adresse (20) du serveur d'authentification (13).

4. Procédé (1) selon l'une quelconque des revendications 1 à 3, **caractérisé en ce que** sur l'appareil de terrain (3) et sur le serveur d'authentification (13), des moyens cryptographiques (21) sont mémorisés qui permettent à l'appareil de terrain (3) et au serveur d'authentification (13) d'échanger des données de manière cryptée, **en ce que** l'appareil de terrain (3) déduit à l'aide de son moyen cryptographique (21) un identifiant déduit crypté (10') à partir de l'identifiant d'accès (10) et le transmet (14) au serveur d'authentification (13), et **en ce que** le serveur d'authentification (13) décrypte à l'aide de son moyen cryptographique (21) l'identifiant d'accès déduit crypté (10') en identifiant d'accès (10).

5. Procédé (1) selon l'une quelconque des revendications 1 à 4, **caractérisé en ce que** les données d'authentification (15) du serveur d'authentification (13) comprennent aussi des éléments des droits (22) associés à un identifiant d'accès (10), et **en ce que** le résultat d'authentification (17) transmis du serveur d'authentification (13) à l'appareil de terrain (3) comprend aussi l'élément des droits (22) associé à un identifiant d'accès (10).

6. Procédé (1) selon la revendication 5, **caractérisé en ce qu'**un élément des droits (22) est l'un des éléments des droits (22) suivants : accès en lecture seule, accès en lecture limitée, accès en écriture, accès en écriture limitée, appel de fonction, en particulier dans lequel les éléments des droits disposent d'une liste de paramètres et/ou d'une liste de fonctions.

7. Procédé (1) selon la revendication 5 ou 6, **caractérisé en ce que** les éléments des droits (22) désignent des groupes de sous-droits, dans lequel les définitions des groupes de sous-droits sont mémorisées soit sur l'appareil de terrain (3), soit sur le serveur d'authentification (13), et sont transmis à l'appareil de terrain (3) à la demande, en particulier dans lequel des groupes possibles de sous-droits sont : utilisateur, opérateur, expert, service, usine.

8. Procédé (1) selon l'une quelconque des revendications 1 à 7, **caractérisé en ce que** les données d'authentification (15) du serveur d'authentification (13) comprennent aussi des attributs de session (23) associés à un identifiant d'accès (10), et **en ce que** le résultat d'authentification (17) transmis par le serveur d'authentification (13) à l'appareil de terrain (3) comprend aussi les attributs de session (23) associés à un identifiant d'accès (10), en particulier dans lequel un attribut de session (23) peut être : la langue de la session, la durée de la session, l'heure absolue de la session, le nombre des accès à la session, l'interface de la session.

9. Procédé (1) selon l'une quelconque des revendications 5 à 8, **caractérisé en ce que** l'appareil de terrain (3) fournit au terminal (5) une interface utilisateur personnalisée, et la personnalisation de l'interface utilisateur est effectuée à l'aide des éléments des droits (22) et/ou des attributs de session (23), en particulier dans lequel l'appareil de terrain (3) fournit au terminal (5) l'interface utilisateur personnalisée par un serveur web personnalisé, ou l'appareil de terrain (3) personnalise lui-même l'interface utilisateur d'un affichage physique de l'appareil de terrain (3).

10. Procédé (1) selon l'une quelconque des revendications 1 à 9, **caractérisé en ce que** la liaison de communication de terminal (4) et/ou la liaison de communication de serveur (12) sont réalisées selon l'une des technologies suivantes : Bluetooth, réseau local sans fil (WLAN), infrarouge (IR), Ethernet.

11. Système (2) de communication sécurisée entre un appareil de terrain (3) de la technique de l'automatisation et un terminal (5), comprenant l'appareil de terrain (3) et un serveur d'authentification (13), dans lequel l'appareil de terrain (3) est en relation fonctionnelle avec un processus physique (6), et l'appareil de terrain (3) peut être mis en communication par l'intermédiaire d'une interface de bus de terrain (7) avec d'autres appareils de terrain (3a, 3b, 3c, 3d) et/ou un système de contrôle de processus (8), l'appareil de terrain (3) comprenant une électronique de traitement de données (30), dans lequel l'appareil de terrain (3) peut être relié au terminal (5) par l'intermédiaire d'une interface de communication de terminal (31), différente de l'interface de bus de terrain (7), et dans lequel l'appareil de terrain (3) est relié au serveur d'authentification (13) par l'intermédiaire d'une interface de communication de serveur (32), dans lequel l'électronique de traitement de données (30) est configurée de telle sorte qu'elle peut recevoir par l'intermédiaire de l'interface de communication de terminal (31) un identifiant d'accès individuel (10) du terminal connecté (5), dans lequel l'électronique de traitement de données (30) est configurée de telle sorte qu'elle transmet par l'intermédiaire de l'interface de communication de serveur (32) l'identifiant d'accès (10) ou un identifiant d'accès (10') déduit de l'identifiant d'accès (10) au serveur d'authentification (13), dans lequel des données d'authentification (15) sont mémorisées sur le serveur d'authentification (13) à l'aide desquelles l'authenticité de l'identifiant d'accès (10) sur le serveur d'authentification (13) est vérifiée (16), dans lequel l'électronique de traitement de données (30) est configurée de telle sorte qu'elle reçoit par l'intermédiaire de l'interface de communication de serveur (32) un résultat d'authentification (17) déterminé par le serveur d'authentification (13), et dans lequel l'électronique de traitement de données (30) est configurée de telle sorte qu'elle met des ressources de l'appareil de terrain (3) à disposition (19) du terminal (5) en fonction du résultat d'authentification (17) reçu,
**caractérisé en ce que** l'appareil de terrain (3) est configuré de telle sorte qu'il consigne la communication avec le terminal (5) au moins partiellement dans un protocole (27) (26), dans lequel soit le protocole (27) est transmis (28) à la fin de la communication au serveur d'authentification (13) et le protocole (27) est stocké sur le serveur d'authentification (13), soit en variante le protocole (27) est transmis (28) pendant la communication en continu au serveur d'authentification (13) et le protocole (27) est stocké sur le serveur d'authentification (13).

12. Système (2) selon la revendication 11, **caractérisé en ce que** l'appareil de terrain (3) et le serveur d'authentification (13) sont configurés de telle sorte qu'ils peuvent exécuter le procédé (1) selon les particularités de la partie caractérisante d'au moins une revendication parmi les revendications 2 à 10.

13. Système (2) selon la revendication 11 ou 12, **caractérisé en ce que** l'interface de communication de serveur (32), l'interface de communication de terminal (31) et d'éventuels services logiciels en relation avec ces interfaces de communication (31, 32) sont mis en œuvre sur l'appareil de terrain (3) séparément de l'interface de bus de terrain (7) et de services logiciels en relation avec l'interface de bus de terrain (7) de sorte qu'en particulier une influence exercée sur l'interface de bus de terrain (7) et des services logiciels en relation avec l'interface de bus de terrain (7) est impossible par l'intermédiaire de l'interface de communication de serveur (32), par l'intermédiaire de l'interface de communication de terminal (31) et par l'intermédiaire d'éventuels services logiciels en relation avec ces interfaces de communication (31, 32).
